(19) **Europäisches Patentamt / European Patent Office / Office européen des brevets**

(11) **EP 3 680 123 B1**

(12) # EUROPEAN PATENT SPECIFICATION

(45) Date of publication and mention
of the grant of the patent:
**20.11.2024 Bulletin 2024/47**

(21) Application number: **19305032.5**

(22) Date of filing: **09.01.2019**

(51) International Patent Classification (IPC):
**B60L 3/10** *(2006.01)* **B60L 9/00** *(2019.01)*
**B60L 9/16** *(2006.01)* **B60L 15/20** *(2006.01)*
**B61C 15/08** *(2006.01)*

(52) Cooperative Patent Classification (CPC):
**B60L 3/108; B60L 9/00; B60L 9/16; B60L 15/20;**
**B60L 15/2009; B61C 15/08;** B60L 2200/26;
B60L 2220/12; B60L 2220/14; B60L 2220/16;
B60L 2240/12; B60L 2240/421; B60L 2240/423;
B60L 2240/427; B60L 2240/429; (Cont.)

(54) **METHOD FOR CONTROLLING A RAILWAY VEHICLE, A CONTROLLER AND A RAILWAY VEHICLE**

VERFAHREN ZUR STEUERUNG EINES SCHIENENFAHRZEUGES, STEUERGERÄT UND SCHIENENFAHRZEUG

PROCÉDÉ DE COMMANDE D'UN VÉHICULE FERROVIAIRE, ORGANE DE COMMANDE ET VÉHICULE FERROVIAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.07.2020 Bulletin 2020/29**

(73) Proprietors:
- **ALSTOM Holdings**
  **93400 Saint-Ouen-sur-Seine (FR)**
- **Politecnico di Milano**
  **20133 Milano (IT)**

(72) Inventors:
- **DOLCINI, Andrea**
  **20026 NOVATE MILANESE (IT)**
- **RADOVAN, Simone**
  **20861 BRUGHERIO (IT)**
- **CAPORALE, Danilo**
  **20137 MILANO (IT)**
- **COLANERI, Patrizio**
  **20146 MILANO (IT)**

(74) Representative: **Lavoix**
**2, place d'Estienne d'Orves**
**75441 Paris Cedex 09 (FR)**

(56) References cited:
EP-A1- 2 684 735    WO-A1-2017/175119
WO-A1-95/00355    KR-B1- 100 948 350

- **CAPORALE: "Adaptive nonlinear control of braking in railway vehicles", 52ND IEEE CONFERENCE ON DECISION AND CONTROL, 10 December 2013 (2013-12-10)**
- **CAPORALE ET AL.: "Adaptive nonlinear control of braking in railway vehicles", 52ND IEEE CONFERENCE ON DECISION AND CONTROL, 10 December 2013 (2013-12-10)**
- **"WEAR", vol. 258, 2005, ELSEVIER, article "Creep forces in simulations of traction vehicles on adhesion limit", pages: 992 - 1000**
- **CAPORALE DANILO ET AL: "Adaptive nonlinear control of braking in railway vehicles", 52ND IEEE CONFERENCE ON DECISION AND CONTROL, IEEE, 10 December 2013 (2013-12-10), pages 6892 - 6897, XP032577068, ISSN: 0743-1546, ISBN: 978-1-4673-5714-2, [retrieved on 20140307], DOI: 10.1109/CDC.2013.6760981**

- **BRUNO PICASSO ET AL: "A distributed braking control algorithm with preview action for railroad vehicles", IFAC THE 2012 IFAC WORKSHOP ON AUTOMATIC CONTROL IN OFFSHORE OIL AND GAS PRODUCTION, vol. 47, no. 3, 1 January 2014 (2014-01-01), Red Hook, NY, pages 7330 - 7335, XP055604430, ISSN: 1474-6670, ISBN: 978-1-123-47890-7, DOI: 10.3182/20140824-6-ZA-1003.02271**
- **BRUNO PICASSO ET AL: "Braking Control in Railway Vehicles: A Distributed Preview Approach", IEEE TRANSACTIONS ON AUTOMATIC CONTROL., vol. 63, no. 1, 1 January 2018 (2018-01-01), US, pages 189 - 195, XP055604448, ISSN: 0018-9286, DOI: 10.1109/TAC.2017.2725480**

(52) Cooperative Patent Classification (CPC): (Cont.)
B60L 2240/465; B60L 2240/647; Y02T 10/64;
Y02T 10/72; Y02T 90/16

**Description**

The present invention concerns a method for controlling a railway vehicle comprising a motor controller for an electric machine acting on at least one wheel of the railway vehicle.

Further, the present invention relates to a torque controller for a railway vehicle comprising a motor controller for an electric machine acting on at least one wheel of the railway vehicle.

Finally, the present invention relates to a railway vehicle comprising such a controller and a computer program product.

WO 2017/175119 A1 relates to a method for calculating the speed of a railway vehicle and for controlling the torque.

Anti-slip/slide devices, according to state of art, perform an anti-blocking control (ABC) function usually maintaining effort at the limit of adherence by means of threshold of speed, acceleration and jerk. Typically, two strategies are used. The first strategy is aimed to cancel ("kill") the slide in order to operate as much as possible in the micro-slip range of the adherence curve. The first strategy requires quick torque modulation producing a periodical triangular torque reference profile. The second is aimed to "keep" the slide on a constant value in order to benefit of the cleaning effect due to wheel surface temperature increase (adherence regeneration). The second strategy, regulating the slide on a constant value, should apply a less variable effort but, adopting pre-defined thresholds of wheel slip/slide, acceleration and jerk, in real applications sometimes wheel effort and speed can exhibit undesired oscillations.

The publication "Adaptive nonlinear control of braking in railway vehicles" of Caporale et. Al, 52nd IEEE conference on decision and control, December 10-13, 2013, Florence, Italy, discloses a technique for anti-slip control in railway vehicles. The paper discloses a simplified model to estimate an adherence curve.

Object of the invention is to provide a reference torque as constant as possible in order to avoid the excitation of possible resonance of the transmissions and to follow the varying conditions of the rail.

According to an aspect a method for controlling a railway vehicle comprising a motor controller for an electric machine according to claim 1 is provided.

According to embodiments, the present invention may include one or more of the following features:

- the main controller receives an input by a driver of the railway vehicle and/or a train protection system;
- the electric machine is used for accelerating or decelerating the railway vehicle;
- the estimated torque is based on a voltage measured at an input of an inverter and/or phase currents of the electrical machine;
- the reference torque is calculated for each motorized axle separately, wherein a motorized axle is an axle on which the electrical machine acts;
- the electric machine is a permanent magnet electric machine or an asynchronous motor;
- the closed loop control uses a PI or PID control; and/or

According to another aspect, a torque controller for a railway vehicle according to claim 8 is provided.

According to a further aspect, a railway vehicle is provided comprising a motor controller for an electric machine acting on at least one wheel of the railway vehicle, a plurality of wheels, one or more wheel sensors for determining the rotational speed of the wheels, wherein the railway vehicle comprises a torque controller according to an embodiment disclosed herein.

Finally, the present invention relates to a computer program product, comprising commands for implementing the method according to an embodiment disclosed herein when loaded and executed on a processor.

So that the manner in which the above recited features of the present invention can be understood in detail, a more particular description of the invention, briefly summarized above, may be read by reference to embodiments. The accompanying drawings relate to embodiments of the invention and are described in the following:

Figure 1 shows schematically a railway vehicle;
Figure 2 shows schematically a block diagram of a controller according to the invention;
Figure 3 shows a schematic block diagram for determining a reference torque
Figure 4 shows schematically adherence curves in dependence of the longitudinal slip; and
Figure 5 shows schematically a curve of the torques; and a curve of the train's speed and the wheel speed.

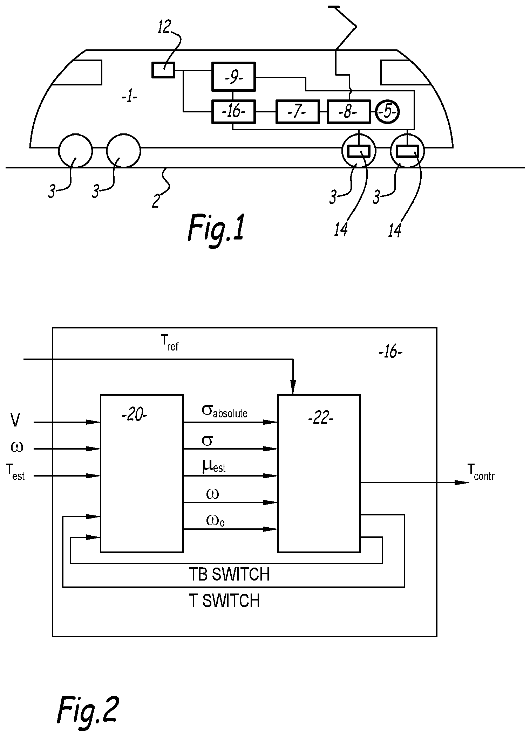

Figure 1 shows a railway vehicle 1 running on a rail 2. The railway vehicle 1 includes wheels 3 which are driven by at least one electrical machine 5. In the following only one electrical machine 5 is mentioned, however the embodiments relate also the railway vehicles with multiple electrical machines 5. The electrical machine 5 is operable to accelerate and to decelerate the wheels 3. Further, the railway vehicle includes a motor controller 7. An inverter 8 feds the electrical machine. A motor controller 7 controls the state of the electrical machine 5 and estimates the motor torque $T_{est}$ from the

measurement of the phase currents of the electrical machine 5 and from the measurement or the estimation of the phase voltages of the electrical machine 5, which can be deduced from the measurement of the DC-bus voltage, at inverter input, and the state of the inverter's commands

According to an embodiment, the electrical machine 5 is a permanent magnet machine. In another embodiment the electrical machine is an asynchronous motor.

The railway vehicle comprises further a central controller 9, which is adapted to receive the commands of a driver or another system, which determines the reference speed and/or the reference torque for the wheels 3 $T_{ref}$. In other words $T_{ref}$, corresponds to the torque request. For example, the other system may be a train protection system, like the European Train Control System.

In an embodiment, the railway vehicle 1 includes at least one speed sensor 12 for determining the speed v of the railway vehicle 1. Alternatively the speed v of the railway vehicle 1 can be estimated by an elaboration of the measured wheels speed performed by the ABC device. Further, the railway vehicle 1 has one or more wheel sensors 14 for determining the rotational speed w of the wheels 3. In an embodiment, which may be combined with other embodiments disclosed herein, the railway vehicle 1 includes a torque controller 16. The torque controller is, according to an embodiment, an anti-blocking control (ABC) device. The torque controller 16 is adapted to calculate a reference torque, which is then provided to the motor controller 7. In an embodiment, the torque controller 16 is connected to the motor controller 7 to receive a calculated motor torque. In addition, the torque controller 16 is connected to the main controller 9 to receive the reference torque $T_{ref}$. Further, the torque controller 16 is directly or indirectly connected to the speed sensor 12 and the wheel sensor 14 for receiving data for determining the actual speed of the railway vehicle 1 and the rotational speed of the wheels 3. In an embodiment, the torque controller 16 is adapted to use the output of the one or more wheel sensors 14 to estimate the speed v of the railway vehicle 1.

In an embodiment, the central controller 9, the motor controller 7 and/or the torque controller 16 are provided in a single controller or two or more controllers.

The torque controller 16 is provided to prevent a sliding or slipping of the wheels 3. For example, the torque controller 16 is adapted to calculate a maximal adherence between the wheels 3 and the rail 2.

Figure 2 shows in more detail the blocks provided in the torque controller 16. A first block 20 is provided to estimate a maximal adherence ($\mu_{est}$) of the railway vehicle 1, in particular the wheels 3, on the rail. Further, the first block 20 calculates the optimal wheel speed $\omega_0$, the slip $\sigma$ and the absolute slip $\sigma_{Absolute}$. The first block 20 also provides the (actual) wheel speed w as an output.

As already described above, the adherence $\mu$ of a wheel on the rail depends on the wheel/rail surface conditions (e.g. dry or wet) and on the speed v of the railway vehicle. The slip or slide depends on the adherence $\mu$, on the rotational speed w of the wheels 3, on the speed v of the railway vehicle 1 and on the actual motoring or braking effort. In other words, the slip or slide is the difference between the tangential speed of the wheel (at the contact point on the rail) and the speed v of the railway vehicle 1.

Further, a second block 22 is adapted to calculate the torque $T_{contr}$ to be provided by the electrical machine 5 to the wheel 3. According to embodiments, the second block 22 implements the control as such.

The torque of the wheel 3 depends on the torque of the electrical machine 5. The output torque $T_{contr}$ of the second block 22 is adapted to be provided to the motor controller 7. The second block 22 is adapted to control the torque based on the estimated maximal adherence $\mu_{est}$ of the first block 20, the slip $\sigma$ and the reference torque $T_{ref}$ provided by the central controller 9.

In an embodiment, the torque control 16, in particular the second block 22, includes a first selecting device to select whether the reference torque $T_{ref}$ is directly provided as output torque $T_{contr}$ or not. In a further example, the torque control 16, in particular the second block 22, includes a second selecting device to discriminate between traction and braking operation. This information is given from the second block to the first block 20. For example, the second block 22 provides the values TSWITSCH and TBSWITCH to the first block 20.

TSWITCH is a logical (or boolean) value which is 0 (false) or 1 (true). When TSWITCH is 0 the reference control torque $T_{contr}$ given to the motor is the value Tref decided by the driver. When TSWITCH is 1 the torque control Tref is no longer given as output but the output $T_{contr}$ is calculated to exploit the maximum adherence force available. This signal is always less or equal (in absolute value) to the torque $T_{ref}$ desired by the driver. TBSWITCH is another logical value to discriminate between traction and braking operation.

The first block 20 and thus the torque controller 16 are adapted to determine the optimal wheel speed $\omega_0$ and/or the maximal adherence $\mu_{est}$ based on the speed v of the railway vehicle, the wheel rotational speed w, and the estimated torque $T_{est}$ received from the motor controller 7.

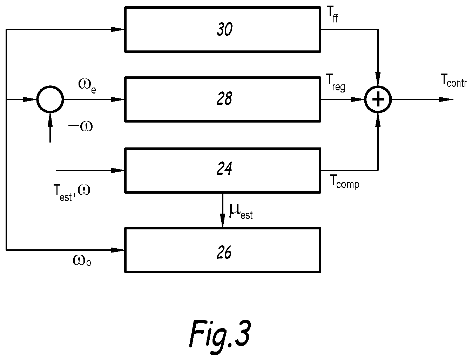

Figure 3 shows a block diagram of different components provided in the torque controller 16.

In block 24 a linear filter is implemented to estimate the maximal adherence $\mu_{est}$ and to calculate a Torque $T_{comp}$.

For example, the linear filter uses the $T_{est}$ and the wheel rotational speed w for calculating the estimation of the maximal adherence $\mu_{est}$. A Kalman filter is used for that purpose.

The filter is adapted to calculate the adherence curve. For example, the adherence curve as described in the article "Adaptive nonlinear control of braking in railway vehicles" of Caporale et al. disclosed on the 52nd IEEE Conference on Decision and Control, December 10-13, 2013, Florence, Italy is used for that purpose.

The adherence curve is calculated based on the following equation:

$$\mu(\sigma, \theta) = \frac{\sqrt{\sigma}}{a + b\sigma + c\sigma^2} = \frac{\sqrt{\sigma}}{\theta' \Phi(\sigma)} \qquad \text{Equation (1),}$$

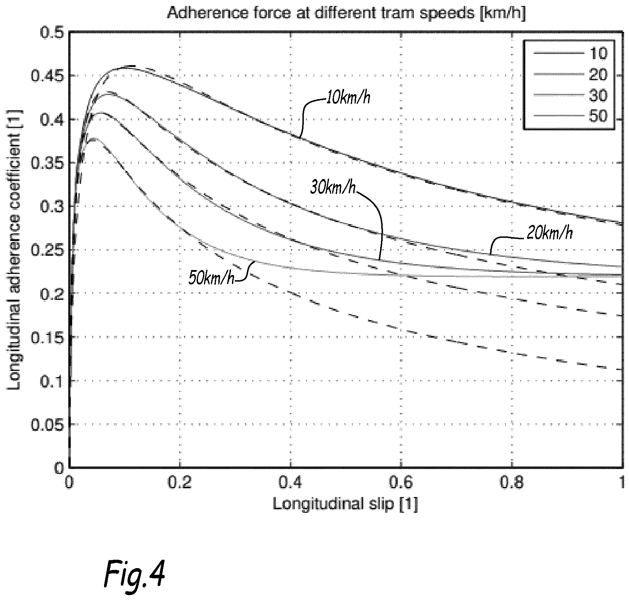

where $\Phi(\sigma) = [1, \sigma, \sigma^2]'$ is the regressor vector and $\theta := [\theta_1 \ \theta_2 \ \theta_3]'$ is the parameters vector. In other words it is obvious that $\theta_1 = a$, $\theta_2 = b$ and $\theta_3 = c$ The equation (1) provides a simplified three parameters model and is used in order to estimate the maximum adherence in block 24. It is a function of the longitudinal slip $\sigma$ and of three parameters a, b, and c. Figure 4 shows the curves of the equation (1) compared to the model provided by Polach in the article "Creep forces in simulations of traction vehicles on adhesion limit" in WEAR 258, pages 992-1000, published in 2005 by Elsevier.

The curves calculated according to Polach are solid, whereas the curves provided according to above equation are dashed. The curves are provided for several railway vehicle speeds, here a tramway speed. It should be noted that the leftmost part of the adherence curve, where the peak is located, is quite accurate while in the rightmost part at least the sign of the derivative of the fitted curve is coherent with the model.

The parameters according to equation (1) are more simply calculated, in particular in real time, compared to the more complex estimation according to Polach. In other words, the three parameters a, b and c are capable of describing all sorts of behaviors one might encounter on real trains.

According to an embodiment, the filter 24 is implemented in block 20 of Figure 2.

According to an embodiment, the adaptive control with linear filtering is built upon the adherence curves according to equation (1) and their parametrization. Thus it is possible that block 20 is adapted to calculate and/or track the maximum adherence point $\mu_{est}$. In other words, the torque calculated by the motor controller 7 is used to calculate the adherence coefficient $\mu_{est}$, in particular with a proper filter. From this information, the output torque $T_{contr}$, to be applied by the motor controller 7, is calculated.

Further, Figure 3 shows a second filter 26 adapted to determine the optimal slip $\sigma_0$ based on the maximal adherence coefficient $\mu_{est}$. A least square filter for curve fitting is used for that purpose. Using the speed of the vehicle and the optimal slip $\sigma_0$, the optimal wheel rotational speed $\omega_0$ is be calculated. According to an embodiment, the second filter 26 is implemented in the block 20 of Figure 2.

Figure 3 shows a control 28, for example a PI (proportional integral) control, for a reference tracking. The control 28 uses as input signal an error signal of the rotational wheel speed we. The error signal we is calculated based on the difference between the optimal rotational speed $\omega_0$ and the actual wheel speed $\omega$. In other embodiments also other controls, in particular closed loop controls, may be used, for example a PID control.

In an embodiment, which may be combined with other embodiments disclosed herein, the control 28 is implemented in block 22 of figure 2.

The control 28 provides as an output signal the regulated Torque $T_{reg}$.

Finally, Figure 3 shows an optional feedforward control 30 for a feedforward action. The feedforward control 30 is used to provide a dynamical adjustment of the control torque $T_{contr}$ based on knowledge about the process in the form of a mathematical model. In an example it uses the optimal rotational speed reference $\omega_0$ and its derivative as an input (not shown in Figure 3). The output of the feedforward control is a feedforward torque $T_{ff}$.

According to an embodiment, the torque $T_{comp}$ provided by the first (linear) filter 24, the output torque $T_{reg}$ provided by the control 28, and optionally the feedforward torque $T_{ff}$ are added to calculate the control torque $T_{contr}$.

According to embodiments, the control torque $T_{contr}$ exhibits reduced oscillations with advantages in term of mechanical wear of components.

Thus, according to the invention, the optimal set point for the rotational wheel speed $\omega_0$ is estimated. Using the optimal wheel rotational speed $\omega_0$, a torque control loop is closed.

According to an embodiment, the optimal wheel speed $\omega_0$ and/or the maximal adherence coefficient $\mu_{est}$ is updated in real time. Therefore, always a precise reference wheel rotational speed is used and the torque controller 16 avoids torque oscillations. Typically, the relative slip or slide is limited within a few percent so that the mechanical stress of the transmission components, for example the wheelset torsional oscillations, and as a consequence the maintenance costs, is reduced, with wheel lifetime improvement.

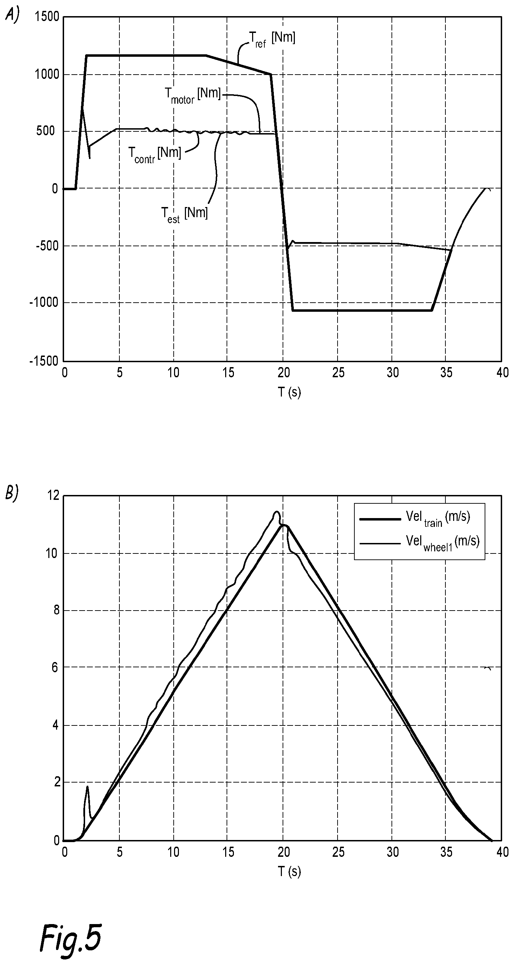

Figure 5 shows schematically in graph A) a curve of the torques and in graph B) shows schematically a curve of the train's speed and the wheel speed. As it can be seen, the control torque $T_{contr}$, the estimated torque $T_{est}$ and the real torque of the motor $T_{motor}$ are very close to each other or even nearly identical. Further, they do not show strong variations. Moreover, as it can be seen from graph B), which shows the train speed $vel_{train}$ and the wheel speed $vel_{wheel}$,

the wheel speed vel_{wheel} does not exhibit large variations.

Thus, the invention permits the estimation of instantaneous value of wheel/rail friction coefficient and thus the estimation of the actual creep force exploitable by the railway vehicle in order to update accordingly the reference torque imposed by the controllers 7, 9, 16, in particular independently axle per axle.

According to the invention, it is possible to provide the maximal traction and/or braking force, in all operating conditions, for example under different rail adherence characteristics. The torque estimated by the motor control 7 is used in order evaluate the optimal exploitable creep force and to update the torque $T_{contr}$ accordingly.

According to the invention, the proposed torque control or ABC control device is able to estimate from the measurement the current rail conditions and provides a reference torque profile as close as possible to its optimal value. Further, according to the invention, when the optimal wheel speed is estimated, a torque control loop is closed and the resulting torque is less oscillating. Moreover, in traction the travelled distance is increased while in braking the stop distance is reduced.

**Claims**

1. Method for controlling a railway vehicle (1) comprising a motor controller (7) for an electric machine (5) acting on at least one wheel of the railway vehicle, and a torque controller (16), the method comprising:

   - receiving a torque request (Tref) from a central controller (9), the torque request is commanded by a driver;
   - determining the actual speed (v) of the railway vehicle (1);
   - determining the actual wheel rotational speed ($\omega$) of the railway vehicle (1);
   - receiving an estimated torque ($T_{est}$) from the motor controller (7);
   - estimating the maximal adherence coefficient ($\mu_{est}$) based on the wheel rotational speed ($\omega$), the actual speed (v) of the railway vehicle, and the estimated torque ($T_{est}$) received from the motor controller, wherein a three parameters model is used in order to estimate the maximum adherence using the following equation:

$$\mu(\sigma, \theta) = \frac{\sqrt{\sigma}}{a + b\sigma + c\sigma^2} = \frac{\sqrt{\sigma}}{\theta'\Phi(\sigma)} ,$$

   where $\Phi(\sigma) = [1, \sigma, \sigma^2]'$ is the regressor vector and $\theta := [\theta_1\ \theta_2\ \theta_3]'$ is the parameters vector, $\mu$ is the adherence, wherein $\theta_1$=a, $\theta_2$=b and $\theta_3$=c, and $\sigma$ the slip , wherein a linear filter (24) is used to estimate the maximal adherence coefficient ($\mu_{est}$) and to calculate a torque $T_{comp}$ based on this maximal adherence coefficient, wherein the linear filter (24) is a Kalman filter;
   - determining an optimal slip based on the maximal adherence coefficient ($\mu_{est}$) using a least square filter for curve fitting, and using the speed of the vehicle and the optimal slip to calculate the optimal wheel rotational speed ($\omega_0$);
   - calculating an error signal ($\omega e$) based on the difference between the optimal wheel rotational speed ($w_0$) and the actual wheel rotational speed (w);
   - calculating a regulated Torque ($T_{reg}$) based on the calculated error signal using a closed loop control (28);
   - determining a reference torque ($T_{contr}$) by adding the torque $T_{comp}$ provided by the linear filter (24), the output torque $T_{reg}$ provided by the closed loop control 28, to calculate the reference torque ($T_{contr}$); and
   - selecting, by a first selecting device of the torque control, whether the torque request (Tref) is directly provided as an output torque ($T_{contr}$) to the motor controller (7) or not, wherein when a logical value of a signal (TSWITCH) is 0, the torque request (Tref) commanded by the driver is given to the motor controller (7) as output torque (Tcontr), when the logical value of the signal (TSWITCH) is 1, the torque request (Tref) is no longer given as output torque (Tcontr), but the reference torque (Tcontr) calculated to exploit the maximum adherence force available is provided as output torque (Tcontr) to the motor controller.

2. Method according to claim 1, wherein the main controller (9) receives an input by a driver of the railway vehicle (1) and/or a train protection system.

3. Method according to one of the preceding claims, wherein the electric machine is used for accelerating or decelerating the railway vehicle (1).

4. Method according to one of the preceding claims, wherein the estimated torque ($T_{est}$) is based on a voltage measured at an input of an inverter (8) and/or phase currents of the electrical machine (5).

5. Method according to one of the preceding claims, wherein the reference torque ($T_{contr}$) is calculated for each motorized axle separately.

6. Method according to one of the preceding claims, wherein the electric machine (5) is a permanent magnet electric machine or an asynchronous motor (5).

7. Method according to claim one of the preceding claims, wherein the closed loop control uses a PI or PID control.

8. Torque controller (16) for a railway vehicle comprising a motor controller (7) for an electric machine (5) acting on at least one wheel of the railway vehicle, the torque controller being adapted to

   - receive torque request ($T_{ref}$) from a central controller (9), the torque request is commanded by a driver;
   - receive or estimate the actual speed (v) of the railway vehicle (1);
   - receive the actual wheel rotational speed (w) of the railway vehicle (1);

     - receive an estimated torque ($T_{est}$) from the motor controller (7);

   - estimate the maximum adherence coefficient ($\mu_{est}$) based on the wheel rotational speed ($\omega$), the actual speed (v) of the railway vehicle, and the estimated torque ($T_{est}$) received from the motor controller, wherein a three parameters model is used in order to estimate the maximum adherence using the following equation:

$$\mu(\sigma, \theta) = \frac{\sqrt{\sigma}}{a + b\sigma + c\sigma^2} = \frac{\sqrt{\sigma}}{\theta'\Phi(\sigma)}$$

   where $\Phi(\sigma) = [1, \sigma, \sigma^2]'$ is the regressor vector and $\theta := [\theta_1\ \theta_2\ \theta_3]'$ is the parameters vector, $\mu$ is the adherence, wherein $\theta_1$=a, $\theta_2$=b and $\theta_3$=c, and $\sigma$ the slip, wherein a linear filter (24) is used to estimate the maximal adherence coefficient ($\mu_{est}$) and to calculate a torque $T_{comp}$ based on this maximal adherence coefficient, wherein the linear filter (24) is a Kalman filter;
   - determine an optimal slip based on the maximal adherence coefficient ($\mu_{est}$) using a least square filter for curve fitting, and using the speed of the vehicle and the optimal slip to calculate the optimal wheel rotational speed ($\omega_0$);
   - calculate an error signal (we) based on the difference between the optimal wheel rotational speed ($w_0$) and the actual wheel speed (w);
   - calculate a regulated Torque ($T_{reg}$) based on the calculated error signal using a closed loop control (28);
   - determine a reference torque ($T_{contr}$) by adding the torque ($T_{comp}$) provided by the linear filter (24), the output torque $T_{reg}$ provided by the closed loop control 28, to calculate the reference torque ($T_{contr}$);;
   - select, by a first selecting device of the torque control (16), whether the torque request (Tref) is directly provided as an output torque ($T_{contr}$) to the motor controller (7) or not, wherein when a logical value of a signal (TSWITCH) is 0, the torque request (Tref) commanded by the driver is given to the motor controller (7) as output torque (Tcontr), when the logical value of the signal (TSWITCH) is 1, the torque request (Tref) is no longer given as output torque (Tcontr), but the reference torque (Tcontr) calculated to exploit the maximum adherence force available is provided as output torque (Tcontr) to the motor controller.

9. Railway vehicle (1) comprising a motor controller (7) for an electric machine (5) acting on at least one wheel (3) of the railway vehicle (1), a plurality of wheels (3), one or more wheel sensors (14) for determining the rotational speed of the wheels (3) , wherein the railway vehicle comprises a torque controller according to claim 8.

10. Computer program product, comprising commands for implementing the method according to one of the claims 1 to 7 when loaded and executed on a processor.

**Patentansprüche**

1. Verfahren zur Steuerung eines Schienenfahrzeugs (1), umfassend eine Motorsteuerung (7) für eine elektrische Maschine (5), die auf mindestens ein Rad des Schienenfahrzeugs wirkt, und eine Drehmomentsteuerung (16), das Verfahren umfassend:

   - Empfangen einer Drehmomentanforderung (Tref) von einer zentralen Steuerung (9), wobei die Drehmomentanforderung von einem Fahrer befohlen wird;
   - Bestimmen der Ist-Geschwindigkeit (v) des Schienenfahrzeugs (1);
   - Bestimmen der Ist-Raddrehzahl (w) des Schienenfahrzeugs (1);
   - Empfangen eines geschätzten Drehmoments ($T_{est}$) von der Motorsteuerung (7);
   - Schätzen des maximalen Haftungskoeffizienten ($\mu_{est}$) basierend auf der Raddrehzahl (w), der Ist-Geschwindigkeit (v) des Schienenfahrzeugs und des geschätzten Drehmoments ($T_{est}$), das von der Motorsteuerung empfangen wird, wobei ein Drei-Parameter-Modell verwendet wird, um die maximale Haftung unter Verwendung der folgenden Gleichung zu schätzen:

   $$\mu(\sigma, \theta) = \frac{\sqrt{\sigma}}{a + b\sigma + c\sigma^2} = \frac{\sqrt{\sigma}}{\theta'\Phi(\sigma)} \quad ,$$

   wobei $\Phi(\sigma) = [1, \sigma, \sigma^2]'$ der Regressorvektor ist und $\theta := [\theta_1\ \theta_2\ \theta_3]'$ der Parametervektor ist, $\mu$ die Haftung ist, wobei $\theta_1 = a$, $\theta_2 = b$ und $\theta_3 = c$, und $\sigma$ der Schlupf ist, wobei ein linearer Filter (24) verwendet wird, um den maximalen Haftungskoeffizienten ($\mu_{est}$) zu schätzen und ein Drehmoment $T_{comp}$ basierend auf diesem maximalen Haftungskoeffizienten zu berechnen, wobei der lineare Filter (24) ein Kalman-Filter ist;
   - Bestimmen eines optimalen Schlupfs basierend auf dem maximalen Haftungskoeffizienten ($\mu_{est}$) unter Verwendung eines Filters der kleinsten Quadrate zur Kurvenanpassung, und Verwendung der Geschwindigkeit des Fahrzeugs und des optimalen Schlupfs, um die optimale Raddrehzahl ($w_0$) zu berechnen;
   - Berechnen eines Fehlersignals (we) basierend auf der Differenz zwischen der optimalen Raddrehzahl ($w_0$) und der Ist-Raddrehzahl (w);
   - Berechnen eines regulierten Drehmoments ($T_{reg}$) basierend auf dem berechneten Fehlersignal unter Verwendung eines geschlossenen Regelkreises (28);
   - Bestimmen eines Referenzdrehmoments ($T_{contr}$) durch Addieren des von dem linearen Filter (24) bereitgestellten Drehmoments $T_{comp}$ und des vom geschlossenen Regelkreis (28) bereitgestellten Ausgangsdrehmoments $T_{reg}$, um das Referenzdrehmoment ($T_{contr}$) zu berechnen; und
   - Auswählen, durch eine erste Auswahlvorrichtung der Drehmomentsteuerung, ob die Drehmomentanforderung (Tref) direkt als Ausgangsdrehmoment ($T_{contr}$) an die Motorsteuerung (7) gegeben wird, wobei, wenn ein logischer Wert eines Signals (TSWITCH) 0 ist, die von dem Fahrer befohlene Drehmomentanforderung (Tref) als Ausgangsdrehmoment (Tcontr) an die Motorsteuerung (7) gegeben wird, wenn der logische Wert des Signals (TSWITCH) 1 ist, die Drehmomentanforderung (Tref) nicht mehr als Ausgangsdrehmoment (Tcontr) gegeben wird, sondern das Referenzdrehmoment (Tcontr), das berechnet wird, um die maximal verfügbare Haftkraft zu nutzen, als Ausgangsdrehmoment (Tcontr) an die Motorsteuerung bereitgestellt wird.

2. Verfahren nach Anspruch 1, wobei die Hauptsteuerung (9) eine Eingabe von einem Fahrer des Schienenfahrzeugs (1) und/oder einem Zugsicherungssystem erhält.

3. Verfahren nach einem der vorherigen Ansprüche, wobei die elektrische Maschine zum Beschleunigen oder Verzögern des Schienenfahrzeugs (1) verwendet wird.

4. Verfahren nach einem der vorherigen Ansprüche, wobei das geschätzte Drehmoment ($T_{est}$) auf einer an einem Eingang eines Wechselrichters (8) gemessenen Spannung und/oder Phasenströmen der elektrischen Maschine (5) basiert.

5. Verfahren nach einem der vorherigen Ansprüche, wobei das Referenzmoment ($T_{contr}$) für jede motorisierte Achse separat berechnet wird.

6. Verfahren nach einem der vorherigen Ansprüche, wobei die elektrische Maschine (5) eine elektrische Permanentmagnetmaschine oder ein Asynchronmotor (5) ist.

**7.** Verfahren nach einem der vorherigen Ansprüche, wobei der Regelkreis eine PI- oder PID-Regelung verwendet.

**8.** Drehmomentsteuerung (16) für ein Schienenfahrzeug, umfassend eine Motorsteuerung (7) für eine elektrische Maschine (5), die auf mindestens ein Rad des Schienenfahrzeugs wirkt, wobei die Drehmomentsteuerung für Folgendes angepasst ist

- Empfangen einer Drehmomentanforderung ($T_{ref}$) von einer zentralen Steuerung (9), wobei die Drehmomentanforderung von einem Fahrer befohlen wird;
- Empfangen oder Schätzen der Ist-Geschwindigkeit (v) des Schienenfahrzeugs (1);
- Bestimmen der Ist-Raddrehzahl ($\omega$) des Schienenfahrzeugs (1);

- Empfangen eines geschätzten Drehmoments ($T_{est}$) von der Motorsteuerung (7);

- Schätzen des maximalen Haftungskoeffizienten ($\mu_{est}$) basierend auf der Raddrehzahl ($\omega$), der Ist-Geschwindigkeit (v) des Schienenfahrzeugs und des geschätzten Drehmoments ($T_{est}$), das von der Motorsteuerung empfangen wird, wobei ein Drei-Parameter-Modell verwendet wird, um die maximale Haftung unter Verwendung der folgenden Gleichung zu schätzen:

$$\mu(\sigma, \theta) = \frac{\sqrt{\sigma}}{a + b\sigma + c\sigma^2} = \frac{\sqrt{\sigma}}{\theta'\Phi(\sigma)},$$

wobei $\Phi(\sigma) = [1, \sigma, \sigma^2]'$ der Regressorvektor ist und $\theta := [\theta_1\ \theta_2\ \theta_3]'$ der Parametervektor ist, $\mu$ die Haftung ist, wobei $\theta_1 = a$, $\theta_2 = b$ und $\theta_3 = c$, und $\sigma$ der Schlupf ist, wobei ein linearer Filter (24) verwendet wird, um den maximalen Haftungskoeffizienten ($\mu_{est}$) zu schätzen und ein Drehmoment $T_{comp}$ basierend auf diesem maximalen Haftungskoeffizienten zu berechnen, wobei der lineare Filter (24) ein Kalman-Filter ist;
- Bestimmen eines optimalen Schlupfs basierend auf dem maximalen Haftungskoeffizienten ($\mu_{est}$) unter Verwendung eines Filters der kleinsten Quadrate zur Kurvenanpassung, und Verwendung der Geschwindigkeit des Fahrzeugs und des optimalen Schlupfs, um die optimale Raddrehzahl ($\omega_0$) zu berechnen;
- Berechnen eines Fehlersignals ($\omega e$) basierend auf der Differenz zwischen der optimalen Raddrehzahl ($\omega_0$) und der Ist-Raddrehzahl ($\omega$);
- Berechnen eines regulierten Drehmoments ($T_{reg}$) basierend auf dem berechneten Fehlersignal unter Verwendung eines geschlossenen Regelkreises (28);
- Bestimmen eines Referenzdrehmoments ($T_{contr}$) durch Addieren des von dem linearen Filter (24) bereitgestellten Drehmoments $T_{comp}$ und des vom geschlossenen Regelkreis (28) bereitgestellten Ausgangsdrehmoments $T_{reg}$, um das Referenzdrehmoment ($T_{contr}$) zu berechnen;
- Auswählen, durch eine erste Auswahlvorrichtung der Drehmomentsteuerung (16), ob die Drehmomentanforderung (Tref) direkt als Ausgangsdrehmoment ($T_{contr}$) an die Motorsteuerung (7) gegeben wird, wobei, wenn ein logischer Wert eines Signals (TSWITCH) 0 ist, die von dem Fahrer befohlene Drehmomentanforderung (Tref) als Ausgangsdrehmoment (Tcontr) an die Motorsteuerung (7) gegeben wird, wenn der logische Wert des Signals (TSWITCH) 1 ist, die Drehmomentanforderung (Tref) nicht mehr als Ausgangsdrehmoment (Tcontr) gegeben wird, sondern das Referenzdrehmoment (Tcontr), das berechnet wird, um die maximal verfügbare Haftkraft zu nutzen, als Ausgangsdrehmoment (Tcontr) an die Motorsteuerung bereitgestellt wird.

**9.** Schienenfahrzeug (1), umfassend eine Motorsteuerung (7) für eine elektrische Maschine (5), die auf mindestens ein Rad (3) des Schienenfahrzeugs (1) wirkt, eine Vielzahl von Rädern (3), einen oder mehrere Radsensoren (14) zum Bestimmen der Drehgeschwindigkeit der Räder (3), wobei das Schienenfahrzeug eine Drehmomentsteuerung nach Anspruch 8 umfasst.

**10.** Computerprogrammprodukt, umfassend Befehle zum Implementieren des Verfahrens nach einem der vorherigen Ansprüche 1 bis 7, wenn sie auf einen Prozessor geladen und ausgeführt werden.

**Revendications**

1. Procédé de commande d'un véhicule ferroviaire (1) comprenant un organe de commande de moteur (7) pour une machine électrique (5) agissant sur au moins une roue du véhicule ferroviaire, et un organe de commande de couple (16), le procédé comprenant :

   - la réception d'une demande de couple (Tref) de la part d'un organe de commande central (9), la demande de couple étant commandée par un conducteur ;
   - la détermination de la vitesse réelle (v) du véhicule ferroviaire (1) ;
   - la détermination de la vitesse réelle de rotation des roues ($\omega$) du véhicule ferroviaire (1) ;
   - la réception d'un couple estimé ($T_{est}$) de l'organe de commande de moteur (7) ;
   - l'estimation du coefficient d'adhérence maximale ($\mu_{est}$) en fonction de la vitesse de rotation des roues ($\omega$), de la vitesse réelle (v) du véhicule ferroviaire et du couple estimé ($T_{est}$) reçu de l'organe de commande de moteur, dans lequel un modèle à trois paramètres est utilisé pour estimer l'adhérence maximale à l'aide de l'équation suivante :

$$\mu(\sigma, \theta) = \frac{\sqrt{\sigma}}{a + b\sigma + c\sigma^2} = \frac{\sqrt{\sigma}}{\theta' \Phi(\sigma)}$$

   où $\Phi(\sigma) = [1 , \sigma , \sigma^2]'$ est le vecteur régresseur et $\theta := [\theta_1\ \theta_2\ \theta_3]'$ est le vecteur de paramètres, $\mu$ est l'adhérence, dans lequel $\theta_1$=a, $\theta_2$=b et $\theta_3$=c, et $\sigma$ le glissement, dans lequel un filtre linéaire (24) est utilisé pour estimer le coefficient d'adhérence maximal ($\mu_{est}$) et pour calculer un couple $T_{comp}$ sur la base de ce coefficient d'adhérence maximal, dans lequel le filtre linéaire (24) est un filtre de Kalman ;
   - la détermination d'un glissement optimal sur la base du coefficient d'adhérence maximal ($\mu_{est}$) à l'aide d'un filtre des moindres carrés pour l'ajustement de la courbe, et l'utilisation de la vitesse du véhicule et du glissement optimal pour calculer la vitesse de rotation optimale des roues ($w_0$) ;
   - le calcul d'un signal d'erreur (we) sur la base de la différence entre la vitesse de rotation optimale des roues ($w_0$) et la vitesse de rotation réelle des roues ($\omega$);
   - le calcul d'un couple régulé ($T_{reg}$) sur la base du signal d'erreur calculé à l'aide d'une commande en boucle fermée (28) ;
   - la détermination d'un couple de référence ($T_{contr}$) en ajoutant le couple $T_{comp}$ fourni par le filtre linéaire (24), le couple de sortie $T_{reg}$ fourni par la commande en boucle fermée 28, pour calculer le couple de référence ($T_{contr}$) ; et
   - la sélection, par un premier dispositif de sélection de la commande de couple, si la demande de couple (Tref) est directement fournie comme un couple de sortie ($T_{contr}$) à l'organe de commande de moteur (7) ou non, dans lequel lorsqu'une valeur logique d'un signal (TSWITCH) est 0, la demande de couple (Tref) commandée par le conducteur est fournie à l'organe de commande de moteur (7) en tant que couple de sortie (Tcontr), lorsque la valeur logique du signal (TSWITCH) est 1, la demande de couple (Tref) n'est plus donnée comme couple de sortie (Tcontr), mais le couple de référence (Tcontr) calculé pour exploiter la force d'adhérence maximale disponible est fourni comme couple de sortie (Tcontr) à l'organe de commande de moteur.

2. Procédé selon la revendication 1, dans lequel l'organe de commande principal (9) reçoit une entrée d'un conducteur du véhicule ferroviaire (1) et/ou d'un système de protection du train.

3. Procédé selon l'une des revendications précédentes, dans lequel la machine électrique est utilisée pour accélérer ou décélérer le véhicule ferroviaire (1).

4. Procédé selon l'une des revendications précédentes, dans lequel le couple estimé ($T_{est}$) est fondé sur une tension mesurée à une entrée d'un onduleur (8) et/ou des courants de phase de la machine électrique (5).

5. Procédé selon l'une des revendications précédentes, dans lequel le couple de référence ($T_{contr}$) est calculé pour chaque essieu motorisé séparément.

6. Procédé selon l'une des revendications précédentes, dans lequel la machine électrique (5) est une machine électrique à aimant permanent ou un moteur asynchrone (5).

7. Procédé selon l'une des revendications précédentes, dans lequel la commande en boucle fermée utilise une commande PI ou PID.

8. Organe de commande de couple (16) pour un véhicule ferroviaire comprenant un organe de commande de moteur (7) pour une machine électrique (5) agissant sur au moins une roue du véhicule ferroviaire, l'organe de commande de couple étant adapté pour

- recevoir une demande de couple ($T_{ref}$) d'un organe de commande central (9), la demande de couple étant commandée par un conducteur ;
- recevoir ou estimer la vitesse réelle (v) du véhicule ferroviaire (1) ;
- recevoir la vitesse réelle de rotation des roues ($\omega$) du véhicule ferroviaire (1) ;

- recevoir un couple estimé ($T_{est}$) de l'organe de commande de moteur (7) ;

- estimer le coefficient d'adhérence maximale ($\mu_{est}$) en fonction de la vitesse de rotation des roues ($\omega$), de la vitesse réelle (v) du véhicule ferroviaire et du couple estimé ($T_{est}$) reçu de l'organe de commande de moteur, dans lequel un modèle à trois paramètres est utilisé pour estimer l'adhérence maximale à l'aide de l'équation suivante :

$$\mu(\sigma, \theta) = \frac{\sqrt{\sigma}}{a + b\sigma + c\sigma^2} = \frac{\sqrt{\sigma}}{\theta' \Phi(\sigma)}$$

où $\Phi(\sigma) = [1 , \sigma , \sigma^2]'$ est le vecteur régresseur et $\theta := [\theta_1\ \theta_2\ \theta_3]'$ est le vecteur de paramètres, $\mu$ est l'adhérence, dans lequel $\theta_1$=a, $\theta_2$=b et $\theta_3$=c, et $\sigma$ le glissement, dans lequel un filtre linéaire (24) est utilisé pour estimer le coefficient d'adhérence maximal ($\mu_{est}$) et pour calculer un couple $T_{comp}$ sur la base de ce coefficient d'adhérence maximal, dans lequel le filtre linéaire (24) est un filtre de Kalman ;
- déterminer un glissement optimal sur la base du coefficient d'adhérence maximal ($\mu_{est}$) à l'aide d'un filtre des moindres carrés pour l'ajustement de la courbe, et utiliser la vitesse du véhicule et le glissement optimal pour calculer la vitesse de rotation optimale des roues ($\omega_0$) ;
- calculer un signal d'erreur (we) sur la base de la différence entre la vitesse de rotation optimale des roues ($w_0$) et la vitesse réelle des roues ($\omega$);
- calculer un couple régulé ($T_{reg}$) sur la base du signal d'erreur calculé à l'aide d'une commande en boucle fermée (28) ;
- déterminer un couple de référence ($T_{contr}$) en ajoutant le couple ($T_{comp}$) fourni par le filtre linéaire (24), le couple de sortie $T_{reg}$ fourni par la commande en boucle fermée 28, pour calculer le couple de référence ($T_{contr}$) ;
- sélectionner, par un premier dispositif de sélection de la commande de couple (16), si la demande de couple (Tref) est directement fournie comme un couple de sortie ($T_{contr}$) à l'organe de commande de moteur (7) ou non, dans lequel lorsqu'une valeur logique d'un signal (TSWITCH) est 0, la demande de couple (Tref) commandée par le conducteur est fournie à l'organe de commande de moteur (7) en tant que couple de sortie (Tcontr), lorsque la valeur logique du signal (TSWITCH) est 1, la demande de couple (Tref) n'est plus donnée comme couple de sortie (Tcontr), mais le couple de référence (Tcontr) calculé pour exploiter la force d'adhérence maximale disponible est fourni comme couple de sortie (Tcontr) à l'organe de commande de moteur.

9. Véhicule ferroviaire (1) comprenant un organe de commande de moteur (7) pour une machine électrique (5) agissant sur au moins une roue (3) du véhicule ferroviaire (1), une pluralité de roues (3), un ou plusieurs capteurs de roue (14) pour déterminer la vitesse de rotation des roues (3), dans lequel le véhicule ferroviaire comprend un organe de commande de couple selon la revendication 8.

10. Produit de programme informatique comportant des instructions pour mettre en oeuvre le procédé selon l'une des revendications 1 à 7, lorsqu'elles sont chargées et exécutées sur un processeur.

*Fig.1*

*Fig.2*

Fig.3

Fig.4

A)

B)

Fig.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017175119 A1

**Non-patent literature cited in the description**

- **CAPORALE.** Adaptive nonlinear control of braking in railway vehicles. *52nd IEEE conference on decision and control, December 10-13, 2013, Florence, Italy,* 10 December 2013

- **CAPORALE et al.** Adaptive nonlinear control of braking in railway vehicles. *52nd IEEE Conference on Decision and Control, December 10-13, 2013, Florence, Italy,* 10 December 2013
- Creep forces in simulations of traction vehicles on adhesion limit. **POLACH.** WEAR. Elsevier, 2005, vol. 258, 992-1000